# EUROPEAN PATENT SPECIFICATION

(11) **EP 2 940 491 B1**
(45) Date of publication and mention of the grant of the patent: **22.03.2023**
(21) Application number: 13867076.5
(22) Date of filing: 28.11.2013
(51) Int. Cl.: G01S 17/00, G01S 17/02, G01S 17/87, G01V 8/10, B01D 35/00, G01V 8/20, G01V 8/22, G01S 17/04

(54) **CONTAINER SENSING DEVICE AND WATER-TREATMENT APPARATUS HAVING SAME**
BEHÄLTERSENSOR UND WASSERBEHANDLUNGSVORRICHTUNG DAMIT
DISPOSITIF DE DÉTECTION DE RÉCIPIENT ET APPAREIL DE TRAITEMENT DE L'EAU LE COMPORTANT

(30) Priority: 28.12.2012 KR 20120156757; 03.06.2013 KR 20130063311
(43) Date of publication of application: 04.11.2015
(73) Proprietor: Coway Co., Ltd., Chungcheongnam-do 314-895 (KR)
(72) Inventor: DAN, Chul-Sun, Seoul 151-851 (KR); KIM, Ki-Chul, Seoul 151-851 (KR); JOUNG, Jin-Kyu, Seoul 151-851 (KR); SEO, Hye-Min, Seoul 151-851 (KR); KA, Jin-Seong, Seoul 151-851 (KR); PARK, Su-Yong, Seoul 151-851 (KR)
(74) Representative: Vidon Brevets & Stratégie
(86) International application number: PCT/KR2013/010920
(87) International publication number: WO 2014/104594

(56) References cited:
- EP-A2- 2 264 253
- JP-A- H1 066 961
- JP-A- 2002 202 177
- JP-A- 2008 015 905
- KR-U- 20110 000 880
- KR-Y1- 200 338 582
- US-A- 4 437 499
- US-A- 5 744 793
- US-A- 5 862 844
- US-A1- 2001 050 116
- US-B1- 6 265 709

## Description

### [Technical Field]

The present disclosure relates to a container sensing apparatus and a water treatment apparatus having the same, and more particularly, to a container sensing apparatus able to detect a provided container and a water treatment apparatus having the same.

### [Background Art]

Water purifiers have been located in an increasing number of places, including homes, to allow efficient access to purified potable water. A water purifier is an apparatus which filters natural water such as tap water or underground water (hereinafter water before purification will be referred to as "raw water"), and water purifiers provide users with potable water by filtering raw water through filters and removing foreign substances or toxic substances from the water.

When it comes to ordinary water purifiers, a user has to push or touch a mechanical or electronic button to get purified water. In this case, however, water may be spattered, and the user has to keep pushing or touching the button until a desired amount of water is dispensed, which is inconvenience for users. For the reason, water purifiers having an automatic water dispensing feature able to automatically fill a user's container with a fixed amount of water are widely used. For instance, the patent document US5744793A discloses an apparatus to detect the position of a container in a target window using the concept of triangulation of energy radiation. The patent document US2001050116A1 discloses a control device capable of detecting the size of a container and dispensing product until the container is considered full. The patent document US5862844A discloses a system for controlling a dispensing apparatus based on an optical sensor to initiate dispensing of a material through the dispensing outlet. The patent document EP2264253A2 discloses an apparatus for dispensing liquid, which apparatus is arranged to detect an object and to control the dispensing of liquid. However, in this case too, an additional motion such as pushing a button or the like should be performed by the user to get water. Therefore, a technology able to minimize user movement when the user gets water from a water purifier is required.

### [Disclosure]

### [Technical Problem]

A container sensing apparatus able to detect a provided container and a water treatment apparatus having the same may be provided.

### [Technical Solution]

The invention is defined by the appended claims.

### [Advantageous Effects]

The container sensing apparatus and the water treatment apparatus having the same detect whether or not a container is present.

The container sensing apparatus and the water treatment apparatus having the same perform a different operation depending on a standby mode and a sensing mode, such that the amount of power consumed to detect a presence of a container may be significantly reduced.

In the container sensing apparatus and the water treatment apparatus having the same according to exemplary embodiments in the present disclosure, transmitters and receivers paired with each other may operate alternately, such that service lives of the transmitters and the receivers may be increased.

According to an exemplary embodiment in the present disclosure, the container sensing apparatus and the water treatment apparatus having the same may include a transmitter and a receiver disposed in a concave-shaped sensing area, such that the container may be prevented from being placed relatively too close to the transmitter and the receiver, and thus, a container may be detected more precisely.

According to an exemplary embodiment in the present disclosure, the container sensing apparatus and the water treatment apparatus having the same may further include a sensor as well as a transmitter and a receiver, such that the container may be detected relatively quickly and more precisely.

### [Description of Drawings]

FIG. 1 is a block diagram of a container sensing apparatus according to the invention;
FIG. 2 is a view schematically illustrating the container sensing apparatus according to an exemplary embodiment in the present disclosure;
FIG. 3 is a graph illustrating an operation of the container sensing apparatus according to the exemplary embodiment in the present disclosure during a standby mode;
FIG. 4 is a graph illustrating an operation of the container sensing apparatus according to the exemplary embodiment in the present disclosure during a sensing mode;
FIG. 5 is a view schematically illustrating a container sensing apparatus according to another exemplary embodiment in the present disclosure;
FIG. 6 is a schematic view illustrating a sensor and a trench unit included in the container sensing apparatus according to the exemplary embodiment in the present disclosure;
FIGS. 7A and 7B are views schematically illustrating a container sensing apparatus according to an exemplary embodiment in the present disclosure;
FIG. 8 is a graph illustrating detection of a container by the container sensing apparatus according to the exemplary embodiment in the present disclosure; and
FIGS. 9 and 10 are graphs illustrating a detection of malfunction of the container sensing apparatus according to the exemplary embodiment in the present disclosure.

### [Best Mode]

Hereinafter, embodiments of the present disclosure will be described in detail with reference to the accompanying drawings.

In the drawings, the shapes and dimensions of elements may be exaggerated for clarity, and the same reference numerals will be used throughout to designate the same or like elements.

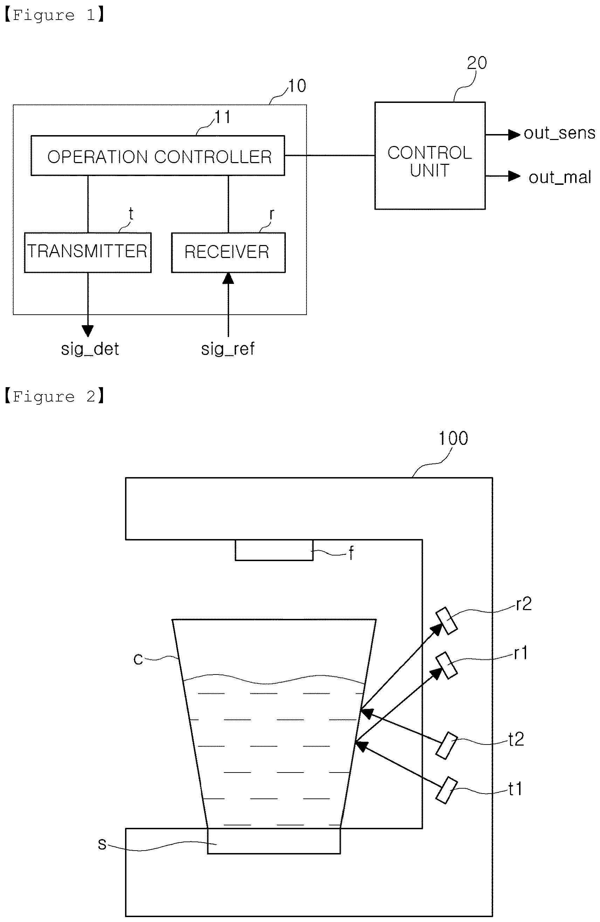

FIG. 1 is a block diagram of a container sensing apparatus according to the invention

Referring to FIG. 1, the container sensing apparatus according to the invention includes a signal sensing unit 10 and a control unit 20. Hereinafter, the container sensing apparatus will be described.

The signal sensing unit 10 transmits a detection signal sig_det at a predetermined angle of incidence and receives a reflection signal sig_ref corresponding to the detection signal sig_det reflected from a surface of a container c. In a case in which the container c is present, the reflection signal sig_ref corresponding to the detection signal sig_det is generated, but in a case in which the container c is not present, the reflection signal sig_ref is not generated. In detail, in the case that the container c is not present, the signal sensing unit 10 does not receive the reflection signal sig_ref. Further, in a case in which the container is not placed in a predetermined water receiving position, the signal sensing unit 10 does not receive the reflection signal sig_ref even after the detection signal sig_det is reflected from the surface of the container c. Thus, the control unit 20 determines whether the container c is placed in the predetermined water receiving position by determining whether the signal sensing unit 10 has received the reflection signal sig_ref.

The signal sensing unit 10 determines whether the reflection signal sig_ref has been received by determining a magnitude of the reflection signal sig_ref. In general, noise may be mixed with signals due to external conditions or the like when the signals are transmitted or received. For example, in a case in which an infrared light signal or the like is used as the detection signal sig_det, the reflection signal sig_ref may be interrupted by indoor light, sunlight, or the like. Thus, when a magnitude of the reflection signal sig_ref received by the signal sensing unit 10 is equal to or greater than a predetermined reference magnitude, the signal sensing unit 10 may determine that the reflection signal sig_ref has been received, and when a magnitude of the reflection signal sig_ref received by the signal sensing unit 10 is smaller than the predetermined reference magnitude, the signal sensing unit 10 may determine that the reflection signal sig_ref has not been received.

The signal sensing unit 10 includes a transmitter t, a receiver r, and an operation controller 11, as illustrated in FIG. 1.

The transmitter t transmits a detection signal sig_det at a predetermined angle of incidence, and the receiver r receives a reflection signal sig_ref corresponding to the detection signal sig_det reflected from a surface of a container c. Here, the transmitter t is disposed to be tilted at a predetermined angle of incidence so as to transmit the detection signal sig_det at the angle of incidence. In addition, the receiver r is disposed to be tilted at an angle of reflection corresponding to the angle of incidence so as to receive the reflection signal sig_ref.

The angle of incidence and the angle of reflection may be determined by a distance between the container c and the transmitter t and between the transmitter t and the receiver r. In detail, the detection signal sig_det and the reflection signal sig_ref may be infrared light signals, and the infrared light signal may be a wave. For example, since the Snell's law is applied, the angle of incidence at which the detection signal sig_det is incident upon a surface of the container c may be equal to the angle of reflection at which the reflection signal sig_ref is reflected from the surface of the container c. Thus, once the distance between the container c and the transmitter t and the distance between the transmitter t and the receiver r are determined, the angle of incidence and the angle of reflection corresponding thereto may be determined.

In addition, as illustrated in FIG. 2, a plurality of transmitters t1 and t2 and receivers r1 and r2 may be installed in a height direction of the container c. Service lives of transmitters transmitting infrared light and receivers receiving infrared light are generally, relatively short. Thus, the service life of the signal sensing unit 10 may be increased by installing a plurality of transmitters and receivers, as illustrated in FIG. 2, and alternately operating each of the plurality of transmitters and receivers. In detail, the plurality of transmitters and receivers may be provided as pairs such that each pair of the transmitters and receivers may be alternately operated, thereby allowing for an increase in the service life of the signal sensing unit 10.

The pairs of transmitters and receivers may be determined according to paths of the detection signal sig_det and the reflection signal sig_ref. For example, since a detection signal of the first transmitter t1 is reflected from a container c and received by the first receiver r1, the first transmitter t1 and the first receiver r1 may be provided as a pair. Similarly, since a detection signal of the second transmitter t2 is reflected from the container c and received by the second receiver r2, the second transmitter t2 and the second receiver r2 may be provided as a pair.

In detail, the pair of the second transmitter t2 and the second receiver r2 may be controlled to transmit the detection signal and receive the reflection signal, respectively, after the pair of the first transmitter t1 and the first receiver r1 transmit the detection signal and receive the reflection signal, respectively. Here, detailed operating times of the transmitters t and the receivers r may be controlled by the operation controller 11.

The operation controller 11 controls operating times of the transmitters t and the receivers r according to a predetermined operating mode. In detail, the operating mode is divided into a standby mode and a sensing mode. The standby mode refers to an operating mode activated when the container c is not detected. The amount of power consumed during the standby mode may be reduced by significantly reducing operating times of the transmitters t and the receivers r. The sensing mode refers to an operating mode activated when the container c is detected. During the sensing mode, whether the container is placed in a predetermined water receiving position is precisely determined.

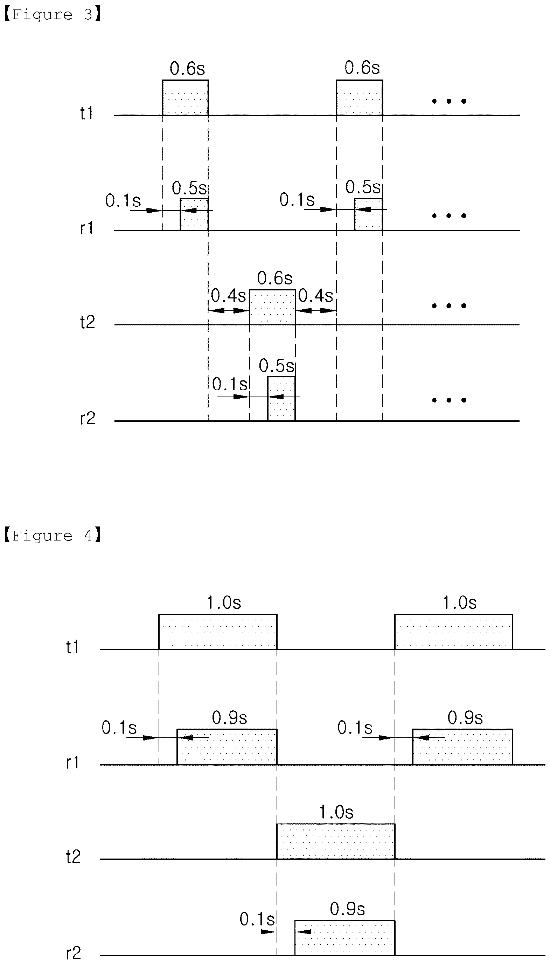

FIG. 3 is a graph illustrating operations of the transmitters t and the receivers r. Referring to FIG. 3, the first transmitter t1 may operate during every standby period (2.0s), a predetermined time period, and operate for a standby operation time (0.6s). In detail, the operation controller 11 may allow the first transmitter t1 to operate every 2.0s by controlling when power is supplied to the first transmitter t1, and may enable the first transmitter t1 to transmit a detection signal sig_det for 0.6s. The first receiver r1, paired with the first transmitter t1, may also operate during every standby period (2.0s), but may start operating 0.1s later than the first transmitter t1 does. In detail, the first receiver r1 may be operated later than the first transmitter t1, in consideration of a time required for the detection signal sig_det transmitted by the first transmitter t1 to be reflected from the container c and then received by the first receiver r1. Thus, the first receiver r1 may operate 0.1s later than the first transmitter t1 and standby to receive the reflection signal sig_ref for the standby operation time of 0.5s.

After the standby operation time of the first transmitter t1 and the first receiver r1, the pair of the second transmitter t2 and the second receiver r2 may start a standby operation. As illustrated in FIG. 3, the second transmitter t2 and the second receiver r2 may operate in the same manner as the first transmitter t1 and the first receiver r1. In detail, the second transmitter t2 and the second receiver r2 may have a standby period of 2.0s, and the second transmitter t2 may operate for a standby operation time of 0.6s. In addition, the second receiver r2 may start operating 0.1s later than the second transmitter t2 does and may operate for a standby operation time of 0.5s. Here, as illustrated in FIG. 3, the pair of the second transmitter t2 and the second receiver r2 may start operating after the pair of the first transmitter t1 and the first receiver r1 operate, operating in an alternating manner therewith.

Further, referring to FIG. 3, a time of 0.4s in which operations of the first transmitter t1, the first receiver r1, the second transmitter t2, and the second receiver r2 cease may be included between an operation of the pair of the first transmitter t1 and the first receiver r1 and an operation of the pair of the second transmitter t2 and the second receiver r2. During the time of 0.4s, the amount of power unnecessarily consumed during the standby mode may be saved by significantly reducing operations of the first transmitter t1, the first receiver r1, the second transmitter t2, and the second receiver r2. In addition, in this case, service lives of the first transmitter t1, the first receiver r1, the second transmitter t2, and the second receiver r2 may be increased.

FIG. 4 is a graph illustrating operations of the transmitters t and the receivers r during a sensing mode. Referring to FIG. 4, the first transmitter t1 may operate during every sensing period (2.0s), a predetermined time period, and the first transmitter t1 may transmit a detection signal sig_det for a sensing operation time of 1.0s. The first receiver r1, paired with the first transmitter t1, may also operate during every sensing period (2.0s), but may start operating 0.1s later than the first transmitter t1 does. In detail, the first receiver r1 may start operating later than the first transmitter t1, in consideration of a time required for the detection signal sig_det transmitted by the first transmitter t1 to be reflected from the container c and then received by the first receiver r1. Thus, the first receiver r1 may standby for the sensing operation time of 0.9s to receive the reflection signal sig_ref.

In detail, after the sensing operation time of the pair of the first transmitter t1 and the first receiver r1, a pair of the second transmitter t2 and the second receiver r2 may start sensing operations. As illustrated in FIG. 4, the second transmitter t2 and the second receiver r2 may have a sensing period of 2.0s, and the second transmitter t2 may transmit a detection signal sig_det for a sensing operation time of 1.0s. The second receiver r2 may start operating 0.1s later than the second transmitter t2 does and may standby for a sensing operation time of 0.9s to receive the reflection signal. Similarly, as illustrated in FIG. 4, the pair of the second transmitter t2 and the second receiver r2 may start operating after the pair of the first transmitter t1 and the first receiver r1 operate, operating in an alternating manner therewith.

Referring to FIG. 4, operating times of the first transmitter t1, the first receiver r1, the second transmitter t2, and the second receiver r2 may be longer during the sensing mode than during the standby mode. In addition, during the sensing mode, the detection signal may be continuously transmitted by the first transmitter t1 and the second transmitter t2. In detail, the operating times of the first transmitter t1, the first receiver r1, the second transmitter t2, and the second receiver r2 are maintained for relatively long periods of time, such that whether the container c is placed in the predetermined water receiving position may be precisely detected. For example, while a user is placing a container c in a water receiving position, the reflection signal sig_ref may be reflected in a plurality of directions because the container c has not yet been placed in a precise water receiving position. Thus, a reflection signal sig_ref momentarily received by a receiver does not necessarily indicate that the container c is precisely placed in the water receiving position. After a while, when the container c is stably placed in the water receiving position and the reflection signal sig_ref is continuously received, the reflection signal sig_ref may indicate that the container c is present in the water receiving position. Thus, transmissions of the detection signals sig_det by the transmitters and standbys for the reflection signal sig_ref by the receivers may be continuously performed in a sensing mode, such that whether the container c is stably placed in the precise water receiving position may be determined.

Here, when the receiver r receives the reflection signal sig_ref during the standby mode, the operation controller 11 may switch an operating mode to the sensing mode. In detail, the reflection signal sig_ref received by the receiver r may indicate that the container c is provided in the water receiving position. Thus, as the operating mode is switched to the sensing mode, whether the container c is placed in the water receiving position may be precisely detected. In addition, when the reflection signal sig_ref is not received by the receiver r for a predetermined switching period of time after the operating mode is switched to the sensing mode, the operating mode may be switched to the standby mode back.

The control unit 20 may determine whether the container c is placed in the predetermined water receiving position, using a reflection signal sig_ref received by the signal sensing unit 10. As described above, when the container c is present in the predetermined water receiving position, the signal sensing unit 10 may receive the reflection signal sig_ref corresponding to the detection signal sig_det reflected from a surface of the container c. On the other hand, in a case in which the container c is not present, or the container c is not placed in the precise water receiving position, the reflection signal may not be received by the signal sensing unit 10. Thus, the control unit 20 may determine whether or not the container is present in the precise water receiving position, by determining whether the reflection signal has been received by the signal sensing unit 10.

In detail, the control unit 20 may determine that the container c has been placed in the water receiving position only when a reflection signal sig_ref having a predetermined signal level or larger is continuously received for a predetermined time or longer. In this case, the control unit 20 may transmit a container sensing signal out_sens, and once the container sensing signal out_sens is transmitted, a water cock f may start to supply the container with fluid by discharging water.

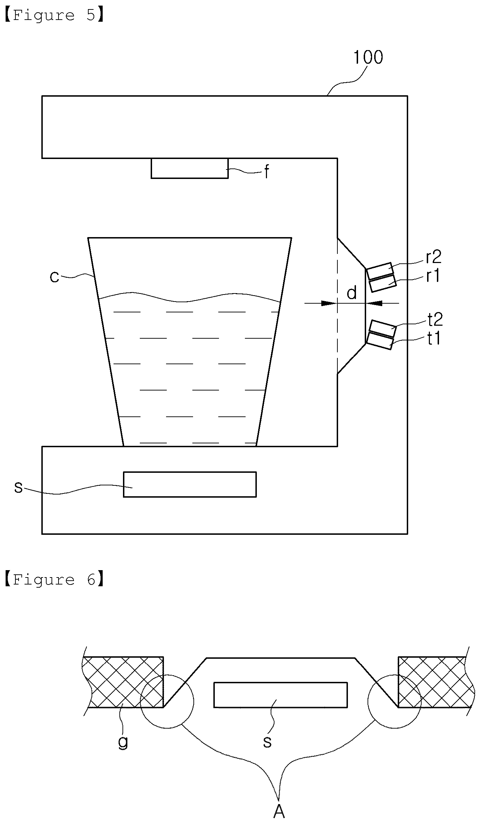

FIG. 5 is a view schematically illustrating a container sensing apparatus according to another exemplary embodiment in the present disclosure. Referring to FIG. 5, the container sensing apparatus according to another exemplary embodiment in the present disclosure may include a sensing area disposed to be dented inwardly in which a plurality of transmitters t1 and t2 and receivers r1 and r2 are installed. In detail, the sensing area may be formed to be perpendicular to the height direction of the container c and dented inwardly by a predetermined length d or greater. The detection signal sig_det may be an infrared light signal. In this case, the reflection signal sig_ref may be received relatively poorly in a case in which a container c is placed relatively too close to the transmitters t1 and t2 and the receivers r1 and r2. In other words, the reflection signal sig_ref may not be precisely received in a case in which the container c is placed relatively too close to the transmitters t1 and t2 and the receivers r1 and r2. Accordingly, in order to prevent the reflection signal sig_ref being received relatively poorly, the transmitters t1 and t2 and the receiver r1 and r2 may be installed in the sensing area. Here, the predetermined length d may be 10mm or greater.

Referring to FIG. 5, the container sensing apparatus may further include a sensor s below the water receiving position. The sensor s may be provided as a remote sensor to detect contact with the container c. In detail, the sensor s may detect contact with the container c, using a difference between a value measured by the remote sensor when the container is present and a value measured by the remote sensor when the container is not present. Whether the container is placed in the water receiving position may be determined more precisely and faster by using the sensor s as well as the transmitters t1 and t2 and the receivers r1 and r2. In further detail, in a case in which only the transmitters t1 and t2 and the receivers r1 and r2 are installed, it may be difficult for the water cock f to supply the container c with fluid at an appropriate time, so the sensor s may be complementarily used.

However, since the sensor s is disposed below the water receiving position, the sensor may be affected by fluid discharged from the water cock. For example, in a case in which fluid discharged from the water cock drops to the water receiving position, a value measured by the sensor s may be changed due to the dropped fluid, and the sensor s may be rendered non-operational by moisture of the fluid or the like. Thus, in order to prevent such a breakdown from happening, a trench unit A may be further provided around the sensor s, as illustrated in FIG. 6. In detail, the fluid dropping to an upper portion of the sensor s may flow into a grill unit g disposed in either sides of the trench unit A and be collected within the grill unit g. Thus, the influence of the fluid supplied to the upper portion of the sensor s on the sensor s may be significantly reduced.

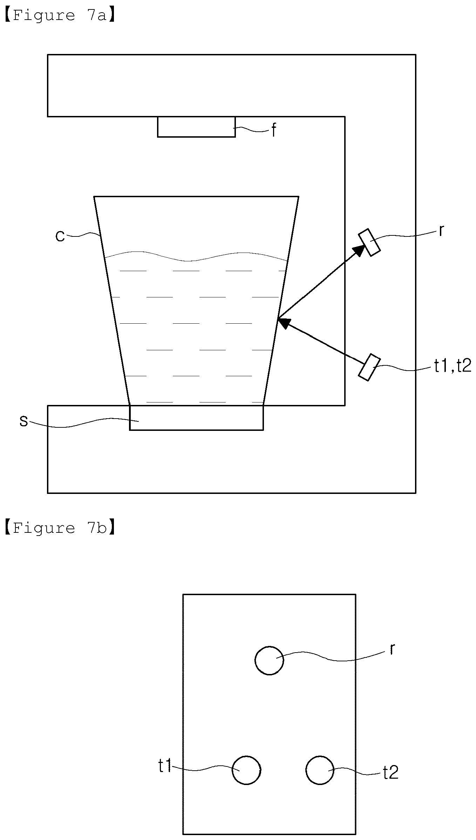

FIG. 7 is a schematic view illustrating a container sensing apparatus according to another exemplary embodiment in the present disclosure. Referring to FIG. 7, the container sensing apparatus may include a plurality of transmitters t1 and t2 and a single receiver r. In detail, as illustrated in FIG. 7B, the plurality of transmitters t1 and t2 may be installed side by side, and an angle of incidence of the detection signal may be set so that respective detection signals sig_det transmitted by the transmitters t1 and t2 may be reflected from the container c and reflections thereof may be received by the receiver r. The transmitters t1 and t2 and the receiver r of the container sensing apparatus may operate according to the standby mode and the sensing mode illustrated in FIG. 3 and FIG. 4. Here, reflection signals sig_ref corresponding to the detection signals sig_det respectively transmitted by the transmitters t1 and t2 may be received by the single receiver r.

The plurality of transmitters t1 and t2 may alternately transmit detection signals sig_det at regular intervals so that respective operating times of the transmitters may not be overlapped, and the receiver r may be synchronized by the operations of the transmitters t1 and t2 and receive the reflection signals sig_ref corresponding to the detection signals sig_det.

In addition, when the receiver r receives the reflection signal sig_ref during the standby mode, the plurality of transmitters t1 and t2 may sequentially transmit the detection signals sig_det for a preset period of time before the operating mode is changed to the sensing mode. Then, when all the reflection signals sig_ref corresponding to the respective detection signals sig_det transmitted by the plurality of the transmitters t1 and t2 are received by the receiver r, the operating mode may be changed to the sensing mode. In detail, the presence of the container c may be determined by determining whether the reflection signals sig_ref from the plurality of transmitters t1 and t2 have been received by the receiver r. When it is determined that the container c is present, the operating mode may be changed to the sensing mode, such that the transmitters t1 and t2 and the receiver r may be operated as illustrated in FIG. 4.

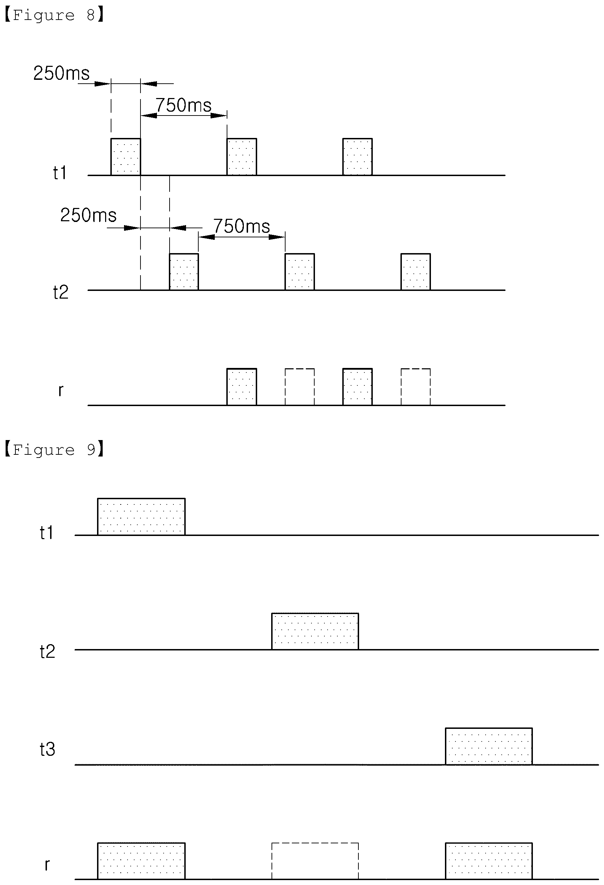

Additionally, the container sensing apparatus may detect the container in the manner illustrated in the FIG. 8. In detail, while the transmitters t1 and t2 and the receiver r are in the standby mode, the receiver r may receive a reflection signal sig_ref. Here, the operating mode may not be switched right away, but may be switched from the standby mode to the sensing mode after it is determined whether the reflection signals sig_ref are continuously received by the receiver r during a predetermined container sensing time Pc. In this case, since a misoperation of the container sensing apparatus incurred by an input error of the reflection signal sig_ref or the like may be prevented from happening, reliability in detecting a container may be improved. The container sensing time Pc may be set to be 1.5 seconds or so.

When the reflection signals sig_ref are continuously received by the receiver r during the container sensing time Pc, it may be determined that the container is present in the water receiving position. Thus, the control unit 20 may output the container sensing signal out_sens and switch operating modes of the transmitters t1 and t2 and the receiver r to the sensing mode. Here, during the sensing mode, the transmitters t1 and t2 and the receiver r may operate consecutively, and thus whether the container c is present may be continuously determined. In detail, the transmitter t1 transmitting the detection signal sig_det at a point in time P1 may continuously transmit the detection signal sig_det until the input of the reflection signal sig_ref to the receiver r ceases, and the receiver r may continuously receive the reflection signal sig_ref until the input of the reflection signal sig_ref thereto ceases. From the time P1, the water cock f may discharge fluid and supply a container c with the fluid, and then, since a case in which the input of the reflection signal sig_ref to the receiver r ceases indicates that the container c has been removed from the water receiving position, the fluid supply may be immediately stopped. Thus, even in a case in which the container is removed from the water receiving position while the fluid is being discharged, the amount of fluid discharged to the outside of the container c may be significantly reduced. The method of detecting a container described above may be applied to the container sensing apparatus according to the exemplary embodiment in the present disclosure of FIG. 2.

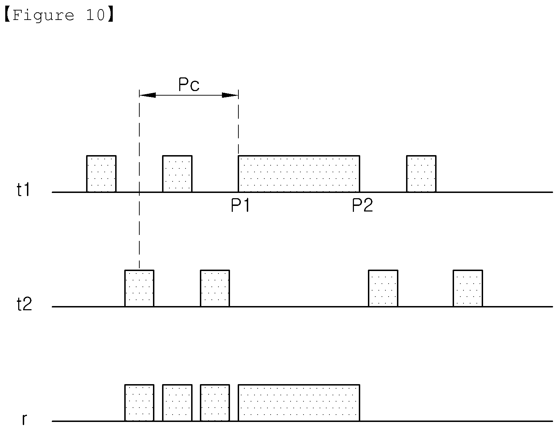

In addition, whether the container sensing apparatus is non-operational may be detected. Hereinafter, a method of detecting a breakdown of the container sensing apparatus will be described, referring to FIG. 9 and FIG. 10.

As illustrated in FIG. 1, the signal sensing apparatus may include a signal sensing unit 10 and a control unit 20. When a malfunction of the signal sensing unit 10 is detected, the control unit 20 may transmit a malfunction signal sig_mal. In detail, the control unit 20 may transmit the malfunction signal when a magnitude of the reflection signal sig_ref is maintained to be a predetermined magnitude or greater for a time less than a predetermined sensing time, or a magnitude of the reflection signal sig_ref is maintained to be less than the predetermined magnitude for a time less than the predetermined sensing time.

In detail, as illustrated in FIG. 9, the transmitter t1 and transmitter t2 may alternately transmit detection signals sig_det at an interval of 250ms, and a reflection signal sig_ref corresponding to the detection signal sig_det may be received by the receiver r. A case in which the receiver r may receive the reflection signal sig_ref corresponding to the detection signal sig_det from the transmitter t1 having a reference magnitude or greater and the reflection signal sig_ref corresponding to the detection signal sig_det from the transmitter t2 having a magnitude smaller than the reference magnitude may occur. In this case, since the interval of the detection signals of the transmitters t1 and t2 is about 750ms, the container c may not be actually placed in the water receiving position, removed from the water receiving position in a time of 750ms or less, and then replaced in the water receiving position again in a time of 750ms. Thus, in a case in which a magnitude of the reflection signal sig_ref is maintained to be a reference magnitude or larger for a relatively short time, for example, for less than 750ms, the control unit 20 may determine that the signal sensing unit 10 has a problem, and thus, the control unit 20 may transmit the malfunction signal out_mal. Here, 750ms may be the sensing time.

As illustrated in FIG. 10, operating modes of transmitters t1, t2, and t3 and the receiver r may be in a breakdown sensing mode in order to detect breakdown of the container sensing apparatus. During the breakdown sensing mode, the operation controller 11 may perform a control such that the plurality of transmitters t1, t2, and t3 may transmit detection signals sig_det consecutively, and the receiver r1 may receive reflection signals sig_ref corresponding to the detection signals sig_det respectively transmitted by the plurality of transmitters t1, t2, and t3. Here, in a case in which a magnitude of the reflection signal sig_ref is changed to a magnitude smaller than the reference magnitude from the reference magnitude or larger, or in a case in which a magnitude of the reflection signal sig_ref is changed to the reference magnitude or greater from a magnitude smaller than the reference magnitude, the control unit 20 may output a malfunction signal out_mal indicating a breakdown of the signal sensing unit 10. For example, when an operating mode is switched to the breakdown sensing mode with a container being present in the water receiving position, the reflection signals sig_ref corresponding to the detection signals respectively transmitted by the transmitters t1, t2, and t3 should be measured to have a reference magnitude or greater. However, in a case in which the transmitter t2 is broken, the reflection signal sig_ref from the transmitter t1 may have a reference magnitude or larger, but the reflection signal sig_ref from the transmitter t2 may have a magnitude smaller than a reference magnitude. Thus, from among the transmitters t1, t2 and t3, a broken transmitter may be recognized. In a case in which a reflection signal sig_ref having a reference magnitude or greater is received during a breakdown sensing mode while a container c is not present in the water receiving position, it may be determined that the transmitter has been broken.

Although not illustrated, various kinds of water treatment apparatuses including the container sensing apparatus according to an exemplary embodiment in the present disclosure may be provided. Here, the water treatment apparatus may refer to a water purifier, a functional water purifier, a water heater, a water cooler, an ice maker, or apparatuses having at least a portion of respective functions thereof.

## Claims

1. (Currently Amended) A container sensing apparatus of a water purifier having an automatic water dispensing feature to fill a container with a fixed amount of water, comprising:
a signal sensing unit configured to transmit a detection signal at a predetermined angle of incidence and to receive a reflection signal corresponding to the detection signal reflected from a surface of the container; and
a control unit configured to determine whether the container is present in a predetermined water receiving position using the reflection signal,
wherein the signal sensing unit includes:
a plurality of transmitters, each of said plurality of transmitters being configured to transmit the detection signal at the predetermined angle of incidence;
at least one receiver configured to receive the reflection signal at an angle of reflection corresponding to the angle of incidence from one or more of said plurality of transmitters;
and
an operation controller configured to control operating times of the plurality of transmitters and the at least one receiver according to a predetermined operating mode,
**characterized in that** the operation controller operates the plurality of transmitters to periodically transmit a detection signal and the at least one receiver to periodically receive a reflection signal for a standby operation time within a standby period when the operating mode is in a standby mode, and operates the plurality of transmitters to periodically transmit a detection signal and the at least one receiver to periodically receive a reflection signal for a sensing operation time within a sensing period when the operating mode is in a sensing mode,
wherein the standby mode is activated when the container is not detected, and the sensing mode is activated when the container is detected,
wherein the standby operation time is shorter than the standby period and the sensing operation time is shorter than the sensing period, and
wherein a length of the standby period is equal to a length of the sensing period, and a length of the standby operation time is shorter than a length of the sensing operation time.

2. (Original) The container sensing apparatus of claim 1, wherein the signal sensing unit includes the plurality of transmitters and receivers paired with each other and disposed along paths of the detection signal and the reflection signal.

3. (Original) The container sensing apparatus of claim 1, wherein the signal sensing unit includes the plurality of transmitters corresponding to a single receiver, and when the plurality of transmitters sequentially transmit the detection signals, the single receiver receives the reflection signals corresponding to the detection signals.

4. (Original) The container sensing apparatus of claim 1, wherein the operation controller switches the operating mode to the sensing mode when the at least one receiver receives the reflection signal during the standby mode, and switches the operating mode to the standby mode when the reflection signal is not received by the at least one receiver for a predetermined switching time during the sensing mode.

5. (Original) The container sensing apparatus of claim 1, wherein when the at least one receiver receives the reflection signal during the standby mode, the operation controller switches the operating mode to the sensing mode and operates the plurality of transmitters and the at least one receiver consecutively, and when an input of the reflection signal to the at least one receiver ceases, the operation controller switches the operating mode to the standby mode.

6. (Original) The container sensing apparatus of claim 1, wherein when the at least one receiver receives the reflection signal during the standby mode, the operation controller operates to allow the plurality of transmitters to sequentially transmit the detection signals, and when all of the reflection signals corresponding to the detection signals respectively transmitted by the plurality of transmitters are received by the at least one receiver, the operation controller changes the operating mode to the sensing mode.

7. (Orignial) The container sensing apparatus of claim 2, wherein the operation controller operates a first transmitter and a third receiver provided as a pair among the plurality of transmitters and receivers for a first operating time, and operates a fourth transmitter and a second receiver provided as a pair among the plurality of transmitters and receivers for a second operating time, such that the pairs of the transmitters and the receivers are alternately operated.

8. (Original) The container sensing apparatus of claim 1, further comprising a sensor disposed below the water receiving position and detecting contact with the container.

9. (Original) The container sensing apparatus of claim 8, further comprising a trench unit formed around the sensor to allow fluid in an upper portion of the sensor to flow into a grill unit.

10. (Original) The container sensing apparatus of claim 1, wherein the control unit outputs a malfunction signal when the magnitude of the reflection signal is maintained to be equal to or greater than the predetermined reference magnitude for a time less than a predetermined sensing time or when a magnitude of the reflection signal is maintained to be smaller than the predetermined reference magnitude for a time less than the predetermined sensing time.

11. (Original) The container sensing apparatus of claim 1, wherein when the operating mode is in a breakdown sensing mode, the operation controller controls the plurality of transmitters to sequentially transmit detection signals and operates the at least one receiver to receive reflection signals corresponding to the detection signals respectively transmitted by the plurality of transmitters.

12. (Original) The container sensing apparatus of claim 11, wherein when a magnitude of the reflection signal received by the at least one receiver is changed to being smaller than the reference magnitude from being equal to or greater than the reference magnitude, or when the magnitude of the reflection signal received by the at least one receiver is changed to being equal to or larger than the reference magnitude from being smaller than the reference magnitude, the control unit transmits a malfunction signal indicating a malfunction of the signal sensing unit.

## Patentansprüche

1. Behältererfassungsvorrichtung eines Wasserreinigers mit einer automatischen Wasserabgabefunktion zum Füllen eines Behälters mit einer festen Wassermenge, umfassend:
eine Signalerfassungseinheit, die so konfiguriert ist, dass sie ein Erfassungssignal unter einem vorbestimmten Einfallswinkel aussendet und ein Reflexionssignal empfängt, das dem von einer Oberfläche des Behälters reflektierten Erfassungssignal entspricht; und
eine Steuereinheit, die so konfiguriert ist, dass sie unter Verwendung des Reflexionssignals bestimmt, ob sich der Behälter in einer vorbestimmten Wasseraufnahmeposition befindet,
wobei die Signalerfassungseinheit umfasst:
mehrere Sender, wobei jeder der mehreren Sender so konfiguriert ist, dass er das Detektionssignal unter dem vorbestimmten Einfallswinkel sendet;
mindestens einen Empfänger, der so konfiguriert ist, dass er das Reflexionssignal unter einem Reflexionswinkel empfängt, der dem Einfallswinkel von einem oder mehreren der mehreren Sender entspricht;
und
eine Betriebssteuerung, die so konfiguriert ist, dass sie die Betriebszeiten der mehreren Sender und des mindestens einen Empfängers gemäß einem vorbestimmten Betriebsmodus steuert,
**dadurch gekennzeichnet, dass** die Betriebssteuerung die mehreren Sender betreibt, um periodisch ein Erfassungssignal zu senden, und den mindestens einen Empfänger betreibt, um periodisch ein Reflexionssignal für eine Bereitschaftsbetriebszeit innerhalb einer Bereitschaftsperiode zu empfangen, wenn der Betriebsmodus in einem Bereitschaftsmodus ist, und die mehreren Sender betreibt, um periodisch ein Erfassungssignal zu senden, und den mindestens einen Empfänger betreibt, um periodisch ein Reflexionssignal für eine Erfassungsbetriebszeit innerhalb einer Erfassungsperiode zu empfangen, wenn der Betriebsmodus in einem Erfassungsmodus ist,
wobei der Bereitschaftsmodus aktiviert wird, wenn der Behälter nicht erkannt wird, und der Erfassungsmodus aktiviert wird, wenn der Behälter erkannt wird,
wobei die Bereitschaftsbetriebszeit kürzer ist als die Bereitschaftsperiode und die Erfassungsbetriebszeit kürzer ist als die Erfassungsperiode, und
wobei eine Länge der Bereitschaftsperiode gleich einer Länge der Erfassungsperiode ist und eine Länge der Bereitschaftsbetriebszeit kürzer ist als eine Länge der Erfassungsbetriebszeit.

2. Behältererfassungsvorrichtung nach Anspruch 1, wobei die Signalerfassungseinheit die mehreren Sender und Empfänger umfasst, die miteinander gepaart und entlang von Pfaden des Erfassungssignals und des Reflexionssignals angeordnet sind.

3. Behältererfassungsvorrichtung nach Anspruch 1, wobei die Signalerfassungseinheit die mehreren Sender umfasst, die einem einzelnen Empfänger entsprechen, und wenn die mehreren Sender nacheinander die Erfassungssignale senden, empfängt der einzelne Empfänger die Reflexionssignale, die den Erfassungssignalen entsprechen.

4. Behältererfassungsvorrichtung nach Anspruch 1, wobei die Betriebssteuerung den Betriebsmodus auf den Erfassungsmodus umschaltet, wenn der mindestens eine Empfänger das Reflexionssignal während des Bereitschaftsmodus empfängt, und den Betriebsmodus auf den Bereitschaftsmodus umschaltet, wenn das Reflexionssignal während des Erfassungsmodus für eine vorbestimmte Schaltzeit nicht von dem mindestens einen Empfänger empfangen wird.

5. Behältererfassungsvorrichtung nach Anspruch 1, wobei, wenn der mindestens eine Empfänger das Reflexionssignal während des Bereitschaftsmodus empfängt, die Betriebssteuerung den Betriebsmodus auf den Erfassungsmodus umschaltet und die mehreren Sender und den mindestens einen Empfänger nacheinander betreibt, und wenn ein Eingang des Reflexionssignals in den mindestens einen Empfänger aufhört, die Betriebssteuerung den Betriebsmodus auf den Bereitschaftsmodus umschaltet.

6. Behältererfassungsvorrichtung nach Anspruch 1, wobei, wenn der mindestens eine Empfänger das Reflexionssignal während des Bereitschaftsmodus empfängt, die Betriebssteuerung so arbeitet, dass die mehreren Sender nacheinander die Erfassungssignale senden können, und wenn alle Reflexionssignale, die den jeweils von den mehreren Sendern gesendeten Erfassungssignalen entsprechen, von dem mindestens einen Empfänger empfangen werden, die Betriebssteuerung den Betriebsmodus in den Erfassungsmodus ändert.

7. Behältererfassungsvorrichtung nach Anspruch 2, wobei die Betriebssteuerung einen ersten Sender und einen dritten Empfänger, die als ein Paar unter den mehreren Sendern und Empfängern vorgesehen sind, für eine erste Betriebszeit betreibt und einen vierten Sender und einen zweiten Empfänger, die als ein Paar unter den mehreren Sendern und Empfängern vorgesehen sind, für eine zweite Betriebszeit betreibt, so dass die Paare der Sender und der Empfänger abwechselnd betrieben werden.

8. Behältererfassungsvorrichtung nach Anspruch 1, ferner umfassend einen Sensor, der unterhalb der Wasseraufnahmeposition angeordnet ist und den Kontakt mit dem Behälter erkennt.

9. Behältererfassungsvorrichtung nach Anspruch 8, ferner umfassend eine Grabeneinheit, die um den Sensor herum ausgebildet ist, um zu ermöglichen, dass Flüssigkeit in einem oberen Abschnitt des Sensors in eine Gittereinheit fließt.

10. Behältererfassungsvorrichtung nach Anspruch 1, wobei die Steuereinheit ein Fehlfunktionssignal ausgibt, wenn die Größe des Reflexionssignals für eine Zeit, die kürzer als eine vorbestimmte Erfassungszeit ist, gleich oder größer als eine vorbestimmte Referenzgröße bleibt, oder wenn eine Größe des Reflexionssignals für eine Zeit, die kürzer als die vorbestimmte Erfassungszeit ist, kleiner als die vorbestimmte Referenzgröße bleibt.

11. Behältererfassungsvorrichtung nach Anspruch 1, wobei, wenn sich der Betriebsmodus in einem Ausfallerfassungsmodus befindet, die Betriebssteuerung die mehreren Sender steuert, um nacheinander Erfassungssignale zu senden, und den mindestens einen Empfänger betreibt, um Reflexionssignale zu empfangen, die den jeweils von den mehreren Sendern gesendeten Erfassungssignalen entsprechen.

12. Behältererfassungsvorrichtung nach Anspruch 11, wobei die Steuereinheit ein Fehlfunktionssignal sendet, das eine Fehlfunktion der Signalerfassungseinheit anzeigt, wenn sich die Größe des von dem mindestens einen Empfänger empfangenen Reflexionssignals so ändert, dass sie kleiner als die Referenzgröße ist, anstatt gleich oder größer als die Referenzgröße zu sein, oder wenn sich die Größe des von dem mindestens einen Empfänger empfangenen Reflexionssignals so ändert, dass sie gleich oder größer als die Referenzgröße ist, anstatt kleiner als die Referenzgröße zu sein.

## Revendications

1. Appareil de détection de récipient d'un purificateur d'eau ayant une caractéristique de distribution d'eau automatique pour remplir un récipient avec une quantité fixe d'eau, comprenant :
une unité de détection de signal configurée pour émettre un signal de détection au niveau d'un angle d'incidence prédéterminé et pour recevoir un signal de réflexion correspondant au signal de détection réfléchi par une surface du récipient ; et
une unité de contrôle configurée pour déterminer si le récipient est présent dans une position de réception d'eau prédéterminée en utilisant le signal de réflexion,
dans lequel l'unité de détection de signal comporte :
une pluralité d'émetteurs, chacun de ladite pluralité d'émetteurs étant configuré pour émettre le signal de détection selon l'angle d'incidence prédéterminé ;
au moins un récepteur configuré pour recevoir le signal de réflexion selon un angle de réflexion correspondant à l'angle d'incidence d'un ou plusieurs de ladite pluralité d'émetteurs
et
un dispositif de contrôle de fonctionnement configuré pour contrôler les temps de fonctionnement de la pluralité d'émetteurs et de l'au moins un récepteur selon un mode de fonctionnement prédéterminé,
**caractérisé en ce que** le dispositif de contrôle de fonctionnement fait fonctionner la pluralité d'émetteurs pour émettre périodiquement un signal de détection et l'au moins un récepteur pour recevoir périodiquement un signal de réflexion pendant un temps de fonctionnement de veille dans une période de veille lorsque le mode de fonctionnement est dans un mode de veille, et fait fonctionner la pluralité d'émetteurs pour émettre périodiquement un signal de détection et l'au moins un récepteur pour recevoir périodiquement un signal de réflexion pendant un temps de fonctionnement de détection dans une période de détection lorsque le mode de fonctionnement est dans un mode de détection,
dans lequel le mode de veille est activé lorsque le récipient n'est pas détecté, et le mode détection est activé lorsque le récipient est détecté,
dans lequel le temps de fonctionnement de veille est plus court que la période de veille et le temps de fonctionnement de détection est plus court que la période de détection, et
dans lequel une longueur de la période de veille est égale à une longueur de la période de détection, et une longueur du temps de fonctionnement de veille est plus courte qu'une longueur du temps de fonctionnement de détection.

2. Appareil de détection de récipient selon la revendication 1, dans lequel l'unité de détection de signal comporte la pluralité d'émetteurs et de récepteurs appariés les uns aux autres et disposés le long des trajets du signal de détection et du signal de réflexion.

3. Appareil de détection de récipient selon la revendication 1, dans lequel l'unité de détection de signal comporte la pluralité d'émetteurs correspondant à un récepteur unique, et lorsque la pluralité d'émetteurs émettent séquentiellement les signaux de détection, le récepteur unique reçoit les signaux de réflexion correspondant aux signaux de détection.

4. Appareil de détection de récipient selon la revendication 1, dans lequel le dispositif de contrôle de fonctionnement commute le mode de fonctionnement vers le mode de détection lorsque l'au moins un récepteur reçoit le signal de réflexion durant le mode de veille, et commute le mode de fonctionnement vers le mode de veille lorsque le signal de réflexion n'est pas reçu par l'au moins un récepteur pendant un temps de commutation prédéterminé durant le mode de détection.

5. Appareil de détection de récipient selon la revendication 1, dans lequel lorsque l'au moins un récepteur reçoit le signal de réflexion durant le mode de veille, le dispositif de contrôle de fonctionnement commute le mode de fonctionnement vers le mode de détection et fait fonctionner la pluralité d'émetteurs et l'au moins un récepteur consécutivement, et lorsqu'une entrée du signal de réflexion vers l'au moins un récepteur cesse, le dispositif de contrôle de fonctionnement commute le mode de fonctionnement vers le mode de veille.

6. Appareil de détection de récipient selon la revendication 1, dans lequel lorsque l'au moins un récepteur reçoit le signal de réflexion durant le mode de veille, le dispositif de contrôle de fonctionnement fonctionne pour permettre à la pluralité d'émetteurs d'émettre séquentiellement les signaux de détection, et lorsque tous les signaux de réflexion correspondant aux signaux de détection émis respectivement par la pluralité d'émetteurs sont reçus par l'au moins un récepteur, le dispositif de contrôle de fonctionnement change le mode de fonctionnement vers le mode de détection.

7. Appareil de détection de récipient selon la revendication 2, dans lequel le dispositif de contrôle de fonctionnement fait fonctionner un premier émetteur et un troisième récepteur fournis comme une paire parmi la pluralité d'émetteurs et de récepteurs pendant un premier temps de fonctionnement, et fait fonctionner un quatrième émetteur et un deuxième récepteur fournis comme une paire parmi la pluralité d'émetteurs et de récepteurs pendant un second temps de fonctionnement, de sorte que les paires des émetteurs et des récepteurs fonctionnent alternativement.

8. Appareil de détection de récipient selon la revendication 1, comprenant en outre un capteur disposé sous la position de réception d'eau et détectant le contact avec le récipient.

9. Appareil de détection de récipient selon la revendication 8, comprenant en outre une unité de tranchée formée autour du détecteur pour permettre au fluide dans une partie supérieure du détecteur de s'écouler dans une unité de grille.

10. Appareil de détection de récipient selon la revendication 1, dans lequel l'unité de contrôle délivre en sortie un signal de dysfonctionnement lorsque l'amplitude du signal de réflexion est maintenue égale ou supérieure à l'amplitude de référence prédéterminée pendant un temps inférieur à un temps de détection prédéterminé ou lorsqu'une amplitude du signal de réflexion est maintenue inférieure à l'amplitude de référence prédéterminée pendant un temps inférieur au temps de détection prédéterminé.

11. Appareil de détection de récipient selon la revendication 1, dans lequel lorsque le mode de fonctionnement est dans un mode de détection de panne, le dispositif de contrôle de fonctionnement contrôle la pluralité d'émetteurs pour émettre séquentiellement des signaux de détection et fait fonctionner l'au moins un récepteur pour recevoir des signaux de réflexion correspondant aux signaux de détection émis respectivement par la pluralité d'émetteurs.

12. Appareil de détection de récipient selon la revendication 11, dans lequel lorsqu'une amplitude du signal de réflexion reçu par l'au moins un récepteur est changée pour être inférieure à l'amplitude de référence alors qu'elle était égale ou supérieure à l'amplitude de référence, ou lorsque l'amplitude du signal de réflexion reçu par l'au moins un récepteur est changée pour être égale ou supérieure à l'amplitude de référence alors qu'elle était inférieure à l'amplitude de référence, l'unité de contrôle émet un signal de dysfonctionnement indiquant un dysfonctionnement de l'unité de détection de signal.
